# EUROPÄISCHE PATENTSCHRIFT

(11) **EP 1 215 653 B1**
(45) Veröffentlichungstag und Bekanntmachung des Hinweises auf die Patenterteilung: **17.09.2003**
(21) Anmeldenummer: 00127691.4
(22) Anmeldetag: 18.12.2000
(51) Int. Cl.: G10L 15/06, G10L 15/26

(54) **Verfahren und Anordnung zur Spracherkennung für ein Kleingerät**
Method and system for speech recognition for a small size implement
Procédé et dispositif pour la reconnaissance de la parole dans un petit appareil

(43) Veröffentlichungstag der Anmeldung: 19.06.2002
(73) Patentinhaber: SIEMENS AKTIENGESELLSCHAFT, 80333 München (DE)
(72) Erfinder: Niemoeller, Meinrad, 83607 Holzkirchen (DE); Schneider, Tobias, Dr., 81825 München (DE)

(56) Entgegenhaltungen:
- EP-A- 0 724 251
- EP-A- 1 047 046
- WO-A-99/54869
- DE-A- 19 813 834
- DIAKOLOUKAS V ET AL: "Development of dialect-specific speech recognizers using adaptation methods" SPEECH PROCESSING. MUNICH, APR. 21 - 24, 1997,LOS ALAMITOS, IEEE COMP. SOC. PRESS,US, 21. April 1997 (1997-04-21), Seiten 1455-1458, XP002111686 ISBN: 0-8186-7920-4
- TAJCHMAN G ET AL: "BUILDING MULTIPLE PRONUNCIATION MODELS FOR NOVEL WORDS USING EXPLORATORY COMPUTATIONAL PHONOLOGY" EUROPEAN CONFERENCE ON SPEECH COMMUNICATION AND TECHNOLOGY. (EUROSPEECH),ES,MADRID: GRAFICAS BRENS, Bd. CONF. 4, 18. September 1995 (1995-09-18), Seiten 2247-2250, XP000855158

## Beschreibung

Die Erfindung betrifft ein Verfahren zur sprecherunabhängigen Spracherkennung für ein Telekommunikations- bzw. Datenendgerät nach dem Oberbegriff des Anspruchs 1 sowie eine Anordnung zur Durchführung dieses Verfahrens.

Nachdem die Spracheingabe für Textprogramme sowie die Sprachsteuerung von Gerätefunktionen sich bei PCs seit Jahren bewährt und einen hohen Grad an Erkennungsgenauigkeit erreicht hat, wird sie seit kurzem verstärkt auch bei einfacheren Endgeräten von Telekommunikations- bzw. Datennetzen, insbesondere Mobiltelefonen und Handheld-PCs und PDAs (Personal Digital Assistants) eingesetzt. Entsprechende Geräte sind bereits auf dem Markt erhältlich. Die Sprachsteuerung bietet hier einen erhöhten Bedienkomfort bei der Aktivierung häufig benötigter Funktionen bzw. beim Wählen häufig benutzter Rufnummern.

Die Spracherkennung auf derartigen Endgeräten beruht in der Regel auf Algorithmen der sprecherabhängigen Spracherkennung. Bei diesen Verfahren muß der Wortschatz durch Einsprechen aller Worte seitens des Benutzers trainiert werden.

Im Gegensatz dazu erlauben sprecherunabhängige Spracherkennungsverfahren den sofortigen Einsatz ohne Initialisierung, den sogenannten Enrollment-Prozeß. Einfachere, relativ preiswerte Endgeräte ("Low-Cost"-Geräte) verfügen bereits über relativ leistungsfähige Mikrocontroller oder Mikroprozessoren mit hoher Rechenleistung, so daß für die nächsten Jahre eine Ablösung der unbequemeren sprecherabhängigen Spracherkennung bei derartigen Geräten durch die hinsichtlich der benötigten Verarbeitungsleistung aufwendigere sprecherunabhängige Spracherkennung zu erwarten steht.

Eine Erweiterung des Wortschatzes bei Verfahren der sprecherunabhängigen Spracherkennung erfolgt über die Generierung einer phonetischen Transkription aus einer orthografischen Repräsentation jedes neuen Wortes. Die neuen Worte werden also durch den Benutzer (beispielsweise mittels einer alphanumerischen Tastatur oder eines Touch-Screen) als Text eingegeben, und der Text wird anschließend in eine standardisierte Lautschrift der Phoneme in der jeweiligen Sprache abgebildet. Diese Repräsentation bildet dann die Grundlage weiterer Verarbeitungsschritte, bei denen die Phoneme in kleinere Segmente aufgeteilt und nach etablierten Algorithmen der Spracherkennung weiterverarbeitet, beispielsweise als Hidden-Markov-Zustände in einen Suchraum eines Hidden-Markov-Modells eingetragen werden.

Nach vorliegenden Erfahrungen treten bei Verfahren der sprecherunabhängigen Spracherkennung bei bestimmten Benutzern verstärkt Falscherkennungen auf - sei es, weil der Sprecher einen besonders starken Dialekt hat oder bestimmte Phoneme besonders eigenartig ausspricht oder einen Sprachfehler hat. Im Hinblick hierauf wie auch auf den vorab erwähnten Aspekt der Erhöhung der Verwechslungsgefahr mit Erweiterung des Wortschatzes erscheint es als wünschenswert, bei einem Verfahren zur sprecherunabhängigen Spracherkennung Adaptionsmöglichkeiten auch während der Anwendungsphase vorzusehen. Auch dies ist an sich von Diktiersystemen für PCs bekannt und wird als überwachte Sprecher- bzw. Wortschatzadaption bezeichnet. Dokument DE-A1-19813834 offenbart die Speicherung benutzerspezifischer Daten auf ein Speichermedium, wobei diese Daten bei der Erkennung zum Server übertragen und in Server als Vergleichsinformation verwendet werden. Derartige Verfahren sind aber auf elektronischen Kleingeräten mit ihrer begrenzten Rechenleistung und Speicherkapazität normalerweise nicht anwendbar.

Der Erfindung liegt daher die Aufgabe zugrunde, ein Verbessertes Verfahren der gattungsgemäßen Art anzugeben, welches den Einsatz der sprecherunabhängigen Spracherkennung bei elektronischen Kleingeräten erleichtert. Weiterhin soll eine zur Durchführung dieses Verfahrens geeignete Anordnung angegeben werden.

Diese Aufgabe wird hinsichtlich ihres Verfahrensaspektes durch ein Verfahren mit den Merkmalen des Anspruchs 1 und hinsichtlich ihres Vorrichtungsaspektes durch eine Anordnung mit den Merkmalen des Anspruchs 7 gelöst.

Die Erfindung schließt den wesentlichen Gedanken ein, Sprecher- bzw. Wortschatzadaptionen für ein an ein Telekommunikationsnetz angeschlossenes Kleingerät, insbesondere ein einfaches Endgerät, mindestens in ihren wesentlichen Teilen auf einen Server im Netz zu verlagern. Sie schließt weiter den Gedanken ein, die Verarbeitung beim zentralen Server (Adaptions-Server) unter Nutzung eines dort gespeicherten - oder gegebenenfalls auch aktuell dorthin übertragenen - benutzerspezifischen Sprachdatensatzes vorzunehmen. Letztlich werden die als Ergebnis der Sprecher- bzw. Wortschatzadaption verbesserten akustischen Wissensquellen als Datensatz zweckmäßigerweise wieder an das Kleingerät zurückübertragen, so daß er dort unmittelbar für die weitere Anwendung der Sprachsteuerung bzw. -eingabe zur Verfügung steht.

Ähnlich wie bei einem herkömmlichen Trainingsverfahren ("Enrollment") sprecherabhängiger Spracherkennungssysteme werden dem Benutzer in einem Adaptionsdialog vorbestimmte Worte oder Wortfolgen (Phrasen) präsentiert, die er in sein Kleingerät einspricht. Anstelle einer lokalen Speicherung der Sprachdaten erfolgt jedoch eine Übertragung zu dem zentralen Server, wo nach Abschluß der Eingabe der Sprachdaten die eigentliche Adaptionsberechnung abläuft. Ein leistungsfähiger Server wird diese Berechnungen nahezu in Echtzeit ausführen können, so daß der Benutzer das Berechnungsergebnis abwarten kann und am Ende des Adaptionsvorganges sofort die verbesserten akustischen Wissensquellen bzw. den neuen Sprachdatensatz auf sein Endgerät übertragen bekommt. (Es ist allerdings insbesondere durch paketvermittelnde Datendienste, wie sie mit dem GPRS-Standard auch in Mobilfunknetzen Einzug halten, auch ein zeitlich versetztes Herunterladen der akustischen Wissensquellen zum Kleingerät des Benutzers zu einem späteren Zeitpunkt möglich.)

Dies ermöglicht in vorteilhafter Weise eine Entlastung des Endgerätes von Verarbeitungsaufwand und die Vorhaltung von hochgradig speicherplatzaufwendigen Verarbeitungsmitteln - beispielsweise großen Referenzlexika, eines hochentwickelten neuronalen Netzes o. ä. - unabhängig von der Speicherausstattung des Endgerätes. Es können also sehr große Referenzlexika benutzt und vorteilhafterweise auch zentral gepflegt und erweitert werden, in denen eine Vielzahl von Aussprachevarianten vermerkt werden kann. Für Worte, die nicht in einem Referenzlexikon abgelegt sind, lassen sich auf einem entsprechend leistungsfähigen Server komplexe und damit verarbeitungsaufwendige Regelwerke bzw. neuronale Netze zur Abbildung anwenden. Auch bezüglich derartiger Verfahren ermöglicht die Implementierung auf einem zentralen Server eine einfache und sofort für alle Benutzer am Netz vorteilhaft zugreifbare Erweiterung und Aktualisierung. Die ständige Verfügbarkeit der bestmöglichen Abbildungs-Ressourcen auf dem Server ergibt für die Benutzer stets die beim jeweiligen Stand der Technik bestmöglichen Adaptionsresultate.

In einer bevorzugten Ausführung der Erfindung erfolgt die Adaption akustischer Wissensquellen unter Nutzung eines beim Server implementierten komplexen Verarbeitungs-Regelwerkes, beispielsweise eines Hidden-Markov-Modells.

In einer weiteren vorteilhaften Ausführung erfolgt die Sprachdatenverarbeitung in Abhängigkeit von einer Kennung des Endgerätes oder einer über das Endgerät übertragenen Benutzer-Kennung (die z. B. eine Information über Alter und Geschlecht beinhaltet) in einer spezifischen, beispielsweise dialekt- oder aussprachetypischen, Art und Weise. Hierzu wird insbesondere auf in einem großen Aussprachelexikon abgelegte Aussprachevarianten und/oder auf eines einer Mehrzahl verschiedener Aussprachelexika zugegriffen bzw. eine Mehrzahl von für Dialekte oder systematische Aussprachevarianten gebildeten neuronalen Netzen oder Suchräumen von Hidden-Markov-Modellen o. ä. herangezogen.

Die Sprecher- bzw. Wortschatzadaption der akustischen Quellen kann entweder ein sehr allgemeines Hidden-Markov-Modell (z. B. Gesamt-Deutschland) als Startpunkt benutzen, oder eine solche Adaption kann auch Startmodelle auswählen, die dem Sprecher bzw. der Dialektzone entsprechen (z. B. ein Modell aller männlichen Bayern). Auf Basis der Äußerungen des Benutzers adaptiert das Trainingsverfahren dann ein HMM, in dem die "Vektoren/Prototypen des Startmodells in Richtung des Sprechers" verschoben werden. Je besser das Startmodell bereits den Sprecher modelliert, desto schneller konvergiert auch das Adaptionsverfahren und desto besser sind auch die Ergebnisse. Die hier beschriebenen Adaptionsvorgänge sind dabei noch völlig unabhängig von den Aussprachelexika. Diese können durch den Eintrag von Aussprachevarianten zusätzlich positive Effekte auf die Adaption haben. Der oben genannte Aspekt des "Startpunktes" einer Adaption eines HMMs ist aber wichtiger.

In einer wirtschaftlich besonders interessanten Variante wird das vorgeschlagene Verfahren als Dienst einer Telekommunikationsgesellschaft bzw. eines Dienstanbieters realisiert und als solcher den Benutzern insbesondere gegen Entgelt, fallweise aber auch als kostenloser Service, angeboten.

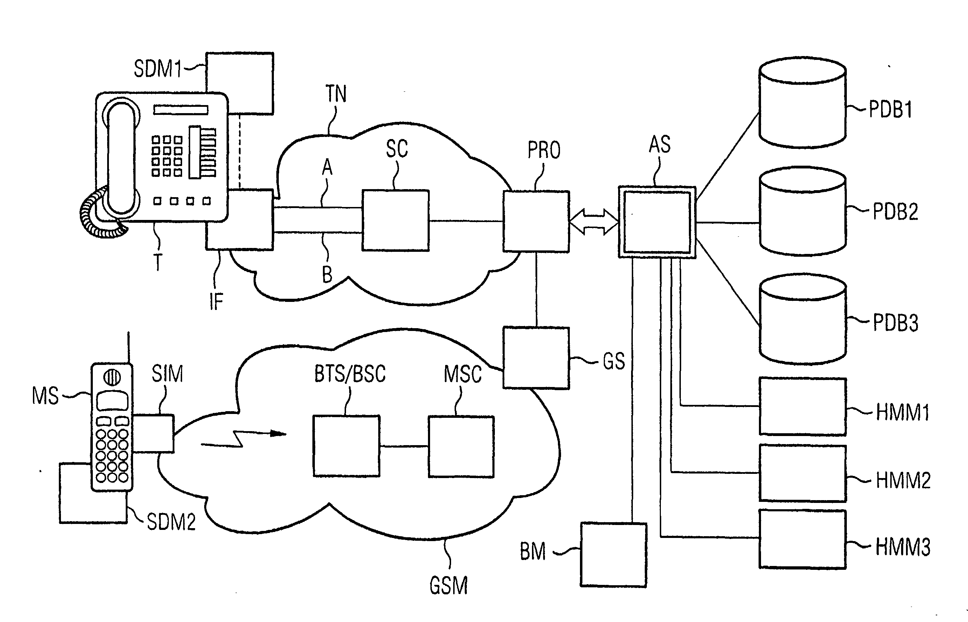

Vorteile und Zweckmäßigkeiten der Erfindung ergeben sich im übrigen aus den Unteransprüchen sowie der nachfolgenden Beschreibung eines bevorzugten Ausführungsbeispiels anhand der Figur.

Diese zeigt - in einer synoptischen Darstellung, die aber bei Bestehen der wirtschaftlichen Voraussetzungen auch technisch realisierbar ist - bevorzugte Ausführungen der Erfindung auf einem ISDN-Festnetztelefon T und einem GSM-Mobiltelefon MS, die an ein leitungsgebundenes Telefonnetz TN bzw. ein Mobilfunknetz GSM angeschlossen sind, im Zusammenwirken mit einem Adaptions-Server AS, der beiden Kommunikationsnetzen TN und GSM gemeinsam zugeordnet ist. Das Festnetztelefon T und das Mobiltelefon MS umfassen jeweils einen internen Sprachdatenspeicher SDM1 bzw. SDM2. Sie stehen über eine ISDN-Telefonleitung ISDN bzw. eine (nicht gesondert bezeichnete) Luftschnittstelle sowie eine Basisstation BTS/BSC jeweils mit einer Vermittlungsstelle SC bzw. MSC ihres Netzes in Verbindung. Über diese wird direkt (beim Festnetz) bzw. indirekt über einen zusätzlichen Gateway-Server GS eine Verbindung zu einem gemeinsamen Verwaltungs- und Dienstzentrum PRO eines Dienstanbieters hergestellt, der sowohl im Festnetz TN als auch im Mobilfunknetz GSM einen Adaptionsdienst als gebührenpflichtigen Dienst anbietet.

Beim Festnetztelefon T ist eine ISDN-Schnittstelleneinrichtung IF eingebaut, die in der Figur lediglich symbolisch als gesonderter Block gezeigt ist. Die ISDN-Leitung zwischen dem Festnetztelefon T und der zugehörigen Vermittlungsstelle SC hat in bekannter Weise einen Sprachkanal A und einen unabhängigen Datenkanal B.

Dem Adaptions-Server AS sind mehrere Aussprachelexikon-Datenbasen PDB1 bis PDB3 sowie mehrere vortrainierte Hidden-Markov-Modelle HMM1 bis HMM3 (z. B. spezifisch für Geschlecht oder mundartlich geprägte Region(en) usw.) als "Startbasen" der Adaption zugeordnet. Weiterhin ist dem Adaptions-Server AS eine Vergebührungseinrichtung BM zur Vergebührung einer Nutzung des Transkriptionsdienstes zugeordnet.

Die Aussprachelexikon-Datenbasen PDB1 bis PDB3 enthalten landessprache- bzw. dialektbezogene Referenzlexika, die auf bestimmte Herkunftsländer bzw. -regionen der Benutzer des Festnetzes TN bzw. des Mobilfunknetzes GSM zugeschnitten sind. Die jeweiligen Herkunftsorte werden im Festnetz anhand der Ortskennzahl des angeschlossenen Telefons T und im Mobilfunknetz anhand der Eintragungen in einer SIM-Karte SIM (im Zusammenwirken mit einem - hier nicht gezeigten - Home Location Register) identifiziert. Die SIM-Karte enthält zudem persönliche Benutzerdaten, wie z. B. Alter und Geschlecht des Benutzers, die für einen effizienten Ablauf der Wortschatzadaption benutzt werden können.

Zur Erläuterung der Funktionsweise dieser Anordnung wird angenommen, das Mobiltelefon sei mit einer Basissoftware zur sprecherunabhängigen Spracherkennung ausgestattet, beinhalte jedoch als zugehörigen Wortschatz bei Auslieferung zunächst nur die Ziffern zum Wählen, die üblichen Steuerbefehle und eine vorbestimmte Auswahl an Personennamen in seiner Landessprache. Bei einem Benutzer mit einem sehr großen Kreis von potentiellen Gesprächspartnern und/oder mit starkem Dialekt oder leichten Sprachfehlern kann es gehäuft zu Falscherkennungen von eingesprochenen Namen und damit zu einer Anwahl falscher Teilnehmer kommen.

Stellt der Benutzer derartige Falscherkennungen fest, so kann er einen Wortschatz-Adaptionsdienst seines Providers anwählen und sich für eine spezifischere Modellierung bei der Wortschatzadaption entscheiden. Im Rahmen einer speziellen Benutzerführung wird ihm dann über eine Anzeige auf dem Display seines Mobiltelefons (oder auch per Sprachsynthese über die Hörkapsel) eine Testmenge von einzusprechenden Worten bzw. Wendungen offeriert. Darunter können insbesondere die Einträge im Namensregister des Mobiltelefons sein. Nachdem der Benutzer alle Sprachäußerungen eingesprochen hat, beginnt umgehend die Adaptionsberechnung zur Adaption der akustischen Wissensquellen auf dem Server AS. Nach wenigen Sekunden liefert der Dienst über einen GPRS-basierten Datenkanal die adaptierten Wissensquellen zum Mobiltelefon MS des Benutzers.

Dieses erkennt und signalisiert die erfolgreiche Adaption und verläßt den Adaptionsdienst.

Die Vergebührungseinrichtung BM stellt für die Inanspruchnahme des Dienstes eine Gebühr in Rechnung, die entweder am Umfang der adaptierten Wissensquellen (Sprachdatensatz) oder an der Zeitdauer des Adaptionsvorganges orientiert ist, und belastet diese normalerweise der Telefonrechnung des Benutzers. Im Rahmen spezieller Tarifgestaltungen kann ein solcher Dienst allerdings natürlich auch kostenlos angeboten werden.

Die Ausführung der Erfindung ist nicht auf dieses Beispiel beschränkt, sondern im Rahmen der Ansprüche auch in einer Vielzahl von Abwandlungen möglich, die im Rahmen fachgemäßen Handelns liegen.

## Patentansprüche

1. Verfahren zur sprecherunabhängigen Spracherkennung für ein elektronisches Kleingerät (MS, T), insbesondere kleines Endgerät, mit einer Spracheingabe- und einer Sprachübertragungseinrichtung sowie einem Sprachdatenspeicher (SDM1, SDM2) zur internen Speicherung eines Sprachdatensatzes in einem Telekommunikationsnetz (GSM, TN),
**dadurch gekennzeichnet, daß**
ausgewählte Worte eines Spracherkennungs-Wortschatzes am Kleingerät eingesprochen,
den eingesprochenen Worten entsprechende Sprachdaten an einen zentralen Server (AS) im Telekommunikationsnetz übertragen und in einer bei diesem vorgesehenen Sprecher-Adaptionseinrichtung unter Nutzung eines beim Server gespeicherten benutzerspezifischen Sprachdatensatzes verarbeitet und
eine im Ergebnis der Verarbeitung enthaltene adaptierte akustische Wissensquelle an das Kleingerät übertragen und in dessen Sprachdatenspeicher gespeichert wird.

2. Verfahren nach Anspruch 1,
**dadurch gekennzeichnet, daß**
die ausgewählten Worte auf dem Kleingerät im Rahmen einer Benutzerführung angezeigt, insbesondere auf einem Display des Kleingerätes optisch dargestellt, werden.

3. Verfahren nach Anspruch 1 oder 2,
**dadurch gekennzeichnet,daß**
die Sprachdatenverarbeitung unter Zugriff auf eine dem Server zugeordnete Aussprachelexikon-Datenbasis (PDB1 bis PDB3) ausgeführt wird.

4. Verfahren nach einem der vorangehenden Ansprüche,
**dadurch gekennzeichnet, daß**
die Sprachdatenverarbeitung unter Nutzung mindestens eines in dem Server implementierten vortrainierten Hidden-Markov-Modells (HMM), bevorzugt mehrerer wahlweise einsetzbarer Hideen-Markov-Modelle (HMM1 bis HMM3), ausgeführt wird.

5. Verfahren nach Anspruch 3 oder 4,
**dadurch gekennzeichnet, daß**
die Sprachdatenverarbeitung in Abhängigkeit von einer Kennung des Endgerätes und/oder persönlicher Daten des Benutzers unter Zugriff auf eines einer Mehrzahl von Aussprachelexika bzw. unter Nutzung eines einer Mehrzahl von Hidden-Markov-Modellen (HMM1 bis HMM3) ausgeführt wird.

6. Verfahren nach einem der vorangehenden Ansprüche,
**dadurch gekennzeichnet,daß**
die Sprachdatenverarbeitung als eigenständiger Dienst in dem Telekommunikations- bzw. Datennetz (GSM, TN) organisiert ist.

7. Anordnung, angepaßt zur Durchführung aller Schritte eines Verfahrens nach einem der vorangehenden Ansprüche,
**gekennzeichnet durch**
eine Mehrzahl von an das Telekommunikationsnetz angeschlossenen Endgeräten (MS, T) und
einen an eine Dienstzentrale (PRO) des Telekommunikationsnetzes angeschlossenen Server (AS), der Mittel zur Sprachdatenverarbeitung der an einem der Endgeräte neu eingesprochenen Worte aufweist.

8. Anordnung nach Anspruch 7,
**dadurch gekennzeichnet, daß**
die Mittel zur Sprachdatenverarbeitung eine Aussprachelexikon-Datenbasis (PDB1 bis PDB3) und/oder mindestens ein vortrainiertes Hidden-Markov-Modell (HMM1 bis HMM3) umfassen.

9. Anordnung nach Anspruch 7 oder 8, **gekennzeichnet durch**
eine dem Server (AP) zugeordnete Vergebührungseinrichtung (BM) zur Vergebührung der Sprachdatenverarbeitung als Dienst.

## Claims

1. Speaker-independent voice recognition method for a small electronic implement (M5, T), in particular small terminal, having a device for inputting and transmitting voice, and a voice data memory (SDM1, SDM2) for internally storing a voice data record in a telecommunications network (GSM, TN), **characterized in that** selected words of a voice recognition vocabulary are input into the small device by means of a voice, voice data corresponding to the voice-input words are transmitted to a central server (AS) in the telecommunications network and processed in a speaker adapter device, provided in said server (AS), using a user-specific voice data record which is stored at the server, and an adapted acoustic knowledge source which is obtained as a result of the processing is transmitted to the small device and stored in its voice data memory.

2. Method according to Claim 1, **characterized in that** the selected words are displayed as part of a user prompting system, in particular are visually represented on a display of the small device.

3. Method according to Claim 1 or 2, **characterized in that** the voice data processing is executed with access to a pronunciation lexicon database (PDB1 to PDB3) which is assigned to the server.

4. Method according to one of the preceding claims, **characterized in that** the voice data processing is carried out using at least one pretrained Hidden Markov model (HMM), preferably a plurality of Hidden Markov models (HMM1 to HMM3) which can be optionally used, which is/are implemented in the server.

5. Method according to Claim 3 or 4, **characterized in that** the voice data processing is carried out as a function of an identifier of the terminal and/or personal data of the user with access to one of a multiplicity of pronunciation lexicons or using one of a multiplicity of Hidden Markov models (HMM1 to HMM3).

6. Method according to one of the preceding claims, **characterized in that** the voice data processing is organized as an independent service in the telecommunications network or data network (GSM, TN).

7. Arrangement, adapted for carrying out all the steps of a method according to one of the preceding claims, **characterized by** a multiplicity of terminals (MS, T) which are connected to the telecommunications network, and a server (AS) which is connected to a service centre (PRO) of the telecommunications network and which has means for processing the words which are newly input by means of voice data into one of the terminals.

8. Arrangement according to Claim 7, **characterized in that** the voice data processing means comprise a pronunciation lexicon database (PDB1 to PDB3) and/or at least one pretrained Hidden Markov model (HMM1 to HMM3).

9. Arrangement according to Claim 7 or 8, **characterized by** a billing device (BM) which is assigned to the server (AP) and has the purpose of billing for the voice data processing as a service.

## Revendications

1. Procédé de reconnaissance vocale indépendante du locuteur pour un petit appareil électronique (MS, T), en particulier un petit terminal doté d'un dispositif d'introduction de données, d'un dispositif de transmission de données ainsi que d'une mémoire de données vocales (SDM1, SDM2) pour la mémorisation interne d'un jeu de données vocales dans un réseau de télécommunication (GSM, TN),
**caractérisé en ce que**
des mots sélectionnés d'un vocabulaire de reconnaissance vocale sont prononcés sur le petit appareil,
des données vocales qui correspondent aux mots prononcés sont transmises à un serveur central (AS) du réseau de télécommunication et sont traitées dans un dispositif d'adaptation du locuteur prévu dans ce dernier en recourant à un jeu de données vocales spécifiques à l'utilisateur conservé en mémoire sur le serveur, et
une source de connaissances acoustiques adaptée obtenue en résultat du traitement est transmise au petit appareil et conservée dans la mémoire de données vocales de ce dernier.

2. Procédé selon la revendication 1, **caractérisé en ce que** les mots sélectionnés sur le petit appareil sont affichés sur un guide d'utilisateur, et en particulier sont représentés visuellement sur l'écran du petit appareil.

3. Procédé selon la revendication 1 ou 2, **caractérisé en ce que** le traitement des données vocales est réalisé en recourant à une base de données (PDB1 à PDB3) d'un lexique d'expressions associé au serveur.

4. Procédé selon l'une des revendications précédentes, **caractérisé en ce que** le traitement des données vocales est réalisé en recourant à au moins un modèle caché de Markov (HMM1) à apprentissage préalable, mis en oeuvre sur le serveur, et de préférence à plusieurs modèles cachés de Markov (HMM1 à HMM3) qui peuvent être utilisés de manière sélective.

5. Procédé selon la revendication 3 ou 4, **caractérisé en ce que** le traitement des données vocales est réalisé en fonction d'une identification du terminal et/ou de données personnelles de l'utilisateur, en recourant à un parmi plusieurs lexiques d'expressions resp. en recourant à un parmi plusieurs modèles cachés de Markov (HMM1 à HMM3).

6. Procédé selon l'une des revendications précédentes, **caractérisé en ce que** le traitement des données vocales est organisé comme service autonome du réseau de télécommunication resp. de données (GSM, TN).

7. Agencement adapté pour la mise en oeuvre de toutes les étapes d'un procédé selon l'une des revendications précédentes, **caractérisé par**
une pluralité de terminaux (MS, T) raccordés au réseau de télécommunication et
un serveur (AS) raccordé à un service central (PRO) du réseau de télécommunication, qui présente des moyens de traitement de données vocales des mots nouveaux prononcés sur l'un des terminaux.

8. Agencement selon la revendication 7, **caractérisé en ce que** les moyens de traitement des données vocales comprennent une base de données (PDB1 à PDB3) de lexique d'expressions et/ou au moins un modèle caché de Markov (HMM1 à HMM3) qui a subi un apprentissage préalable.

9. Agencement selon la revendication 7 ou 8, **caractérisé par** un dispositif de facturation (BM) associé au serveur (AP) pour le calcul des redevances pour le service de traitement des données vocales.
